# EUROPÄISCHE PATENTSCHRIFT

(11) **EP 2 275 891 B1**
(45) Veröffentlichungstag und Bekanntmachung des Hinweises auf die Patenterteilung: **04.04.2018**
(21) Anmeldenummer: 10167021.4
(22) Anmeldetag: 23.06.2010
(51) Int. Cl.: F16K 31/00

(54) **Ventileinrichtung**
Valve device
Valve

(30) Priorität: 29.06.2009 DE 102009031191
(43) Veröffentlichungstag der Anmeldung: 19.01.2011
(73) Patentinhaber: MAHLE Behr Kornwestheim GmbH, 70806 Kornwestheim (DE)
(72) Erfinder: Auweder, Andreas, 71665, Vaihingen/Enz (DE); Mößner, Karin, 71686, Remseck (DE); Kunze, Jürgen, 71277, Rutesheim (DE)
(74) Vertreter: Grauel, Andreas

(56) Entgegenhaltungen:
- EP-A1- 1 752 628
- US-A- 5 738 275

## Beschreibung

Die Erfindung betrifft eine Ventileinrichtung zum Regeln eines Fluidstroms mit einem Ventilgehäuse, das einen Eingang für den Fluidstrom sowie einen ersten und einen zweiten Ausgang aufweist.

Bei der Ventileinrichtung handelt es sich zum Beispiel um ein Thermostatventil für Getriebe- und/oder Motorölregelungen von Kraftfahrzeugen. Der am Eingang in die Ventileinrichtung eintretende Fluidstrom kann entweder zur Kühlung zu einem Kühler oder ungekühlt über einen Kurzschlusskanal an dem Kühler vorbei geführt werden. Aus der deutschen Patentschrift DE 559317 ist ein federbelastetes Gasventil mit einem Gehäuse bekannt, das im inneren einen Ringkanal aufweist. Aus der deutschen Gebrauchsmusteranmeldung DE 6812073 ist eine Regelvorrichtung für Kühlflüssigkeits-Umlaufleitungen mit einem ringförmigen Spalt oder Kanal bekannt. Patentschrift EP1752628A1 offenbart einen Thermostatventil für Ölkreise in Verbrennungsmotoren und US5738275 offenbart einen Thermostatventil für Warmwasseranlagen. Aufgabe der Erfindung ist es, eine Ventileinrichtung gemäß dem Oberbegriff des Anspruchs 1 zu schaffen, die einfach aufgebaut und kostengünstig herstellbar ist.

Die Aufgabe ist bei einer Ventileinrichtung zum Regeln eines Fluidstroms mit einem Ventilgehäuse, das einen Eingang für den Fluidstrom sowie einen ersten und einen zweiten Ausgang aufweist, dadurch gelöst, dass dem ersten Ausgang des Ventilgehäuses ein erster äußerer Ringkanal zugeordnet ist, der durch einen Trennringkörper des Ventilgehäuses von einem zweiten äußeren Ringkanal getrennt ist, der dem zweiten Ausgang des Ventilgehäuses zugeordnet ist. Herkömmliche Ventilgehäuse werden zum Beispiel aus Aluminium im Sandguss- oder Kokillengussverfahren mit einer verlorenen Form hergestellt. Innen liegende Ringkanäle können durch die verlorene Form oder durch eine nachträgliche mechanische Bearbeitung erzeugt werden, was aufwändig und teuer ist. Die gemäß einem wesentlichen Aspekt der Erfindung außen liegenden Ringkanäle, die durch den Trennringkörper voneinander getrennt sind, können kostengünstig, zum Beispiel im Aluminiumdruckgussverfahren oder durch Spritzgießen aus Kunststoff, hergestellt werden.

Ein bevorzugtes Ausführungsbeispiel der Ventileinrichtung ist dadurch gekennzeichnet, dass der erste Ausgang mindestens ein erstes Ventilgehäusefenster umfasst, das sich in den ersten Ringkanal öffnet, Mindestens eine Kante des Ventilgehäusefensters bildet eine Steuerkante der Ventileinrichtung. Wenn das Ventilgehäusefenster geöffnet ist, dann ist eine Fluidverbindung zwischen dem Eingang des Ventilgehäuses und dem ersten Ringkanal freigegeben.

Ein weiteres bevorzugtes Ausführungsbeispiel der Ventileinrichtung ist dadurch gekennzeichnet, dass dem ersten Ringkanal eine erste Reihe Ventilgehäusefenster zugeordnet sind, die sich in den ersten Ringkanal öffnen. Die Ventilgehäusefenster der ersten Reihe sind vorzugsweise gleichmäßig über einen Umfang des Ventilgehäuses verteilt. Das Vorsehen von mehreren Ventilgehäusefenstem liefert den Vorteil, dass Material eingespart wird und unerwünschte Materialanhäufungen vermieden werden. Mindestens eine Kante des Ventilgehäusefensters bildet eine Steuerkante der Ventileinrichtung. Wenn das Ventilgehäusefenster geöffnet ist, wird eine Fluidverbindung zwischen dem Eingang des Ventilgehäuses und dem ersten Ringkanal freigegeben.

Ein weiteres bevorzugtes Ausführungsbeispiel der Ventileinrichtung ist dadurch gekennzeichnet, dass die Ventilgehäusefenster der ersten Reihe durch Trennstege voneinander getrennt sind. Die Trennstege können auf einfache Art und Weise im Spritzgießverfahren aus Kunststoff oder im Aluminiumdruckguss hergestellt werden. Vorzugsweise begrenzen jeweils zwei Trennstege ein Ventilgehäusefenster. Mindestens eine Kante des Veritifgehäusefensters bildet eine Steuerkante der Ventileinrichtung. Wenn das Ventilgehäusefenster geöffnet ist, dann ist eine Fluidverbindung zwischen dem Eingang des Ventilgehäuses und dem ersten Ringkanal freigegeben.

Ein weiteres bevorzugtes Ausführungsbeispiel der Ventileinrichtung ist dadurch gekennzeichnet, dass die Trennstege der ersten Reihe Ventilgehäusefenster einstückig mit einem Abschlusskörper des Ventilgehäuses verbunden sind. Das Ventilgehäuse wird mit dem Abschlusskörper so in ein Sackloch eines Brennkraftmaschinenteils eingesetzt, dass die beiden Ringkanäle im Mündungsbereich von unterschiedlichen Kanälen angeordnet werden.

Ein weiteres bevorzugtes Ausführungsbeispiel der Ventileinrichtung ist dadurch gekennzeichnet, dass der zweite Ausgang mindestens ein zweites Ventilgehäusefenster umfasst, das sich in den zweiten Ringkanal öffnet. Mindestens eine Kante des Ventilgehäusefensters bildet eine Steuerkante der Ventileinrichtung. Wenn das Ventilgehäusefenster geöffnet ist, dann ist eine Fluidverbindung zwischen dem Eingang des Ventilgehäuses und dem zweiten Ringkanal freigegeben.

Ein Weiteres bevorzugtes Ausführungsbeispiel der Ventileinrichtung ist dadurch gekennzeichnet, dass dem zweiten Ringkanal eine zweite Reihe Ventilgehäusefenster zugeordnet sind, die sich in den zweiten Ringkanal öffnen. Die Ventilgehäusefenster der zweiten Reihe sind vorzugsweise gleichmäßig über einen Umfang des Ventilgehäuses verteilt. Das Vorsehen von mehreren Ventilgehäusefenstern liefert den Vorteil, dass Material eingespart wird und unerwünschte Materialanhäufungen vermieden werden. Mindestens eine Kante des Ventilgehäusefensters bildet eine Steuerkante der Ventileinrichtung. Wenn das Ventilgehäusefenster geöffnet ist, wird eine Fluidverbindung zwischen dem Eingang des Ventilgehäuses und dem zweiten Ringkanal freigegeben.

Ein weiteres bevorzugtes Ausführungsbeispiel der Ventileinrichtung ist dadurch gekennzeichnet, dass die Ventilgehäusefenster der zweiten Reihe durch Trennstege voneinander getrennt sind. Die Trennstege können auf einfache Art und Weise im Spritzgießverfahren aus Kunststoff oder im Aluminiumdruckguss hergestellt werden. Vorzugsweise begrenzen jeweils zwei Trennstege ein Ventilgehäusefenster. Mindestens eine Kante des Ventilgehäusefensters bildet eine Steuerkante der Ventileinrichtung. Wenn das Ventilgehäusefenster geöffnet ist, dann ist eine Fluidverbindung zwischen dem Eingang des Ventilgehäuses und dem zweiten Ringkanal freigegeben.

Ein weiteres bevorzugtes Ausführungsbeispiel der Ventileinrichtung ist dadurch gekennzeichnet, dass die Trennstege der zweiten Reihe Ventilgehäusefenster einstückig mit einem Kopf des Ventilgehäuses verbunden sind. Der Kopf des Ventilgehäuses dient zum Beispiel dazu, eine Ausnehmung oder ein Sackloch, in dem die Ventileinrichtung aufgenommen, ist zur Umgebung hin zu verschließen.

Ein weiteres bevorzugtes Ausführungsbeispiel der Ventileinrichtung ist dadurch gekennzeichnet, dass die Trennstege senkrecht zu dem Trennringkörper verlaufen. Dadurch wird die Herstellung des Ventilgehäuses vereinfacht. Die Trennstege können aber auch anders als senkrecht verlaufen.

Ein weiteres bevorzugtes Ausführungsbeispiel der Ventileinrichtung ist dadurch gekennzeichnet, dass die Trennstege einstückig mit dem Trennringkörper verbunden sind. Vorzugsweise ist der Trennringkörper über die Trennstege einstückig mit dem Kopf und mit dem Abschlusskörper des Ventilgehäuses verbunden.

Ein weiteres bevorzugtes Ausführungsbeispiel der Ventileinrichtung ist dadurch gekennzeichnet, dass die Trennstege gleichmäßig über den Umfang des Ventilgehäuses verteilt sind. Vorzugsweise verlaufen die Trennstege der ersten Reihe Ventilgehäusefenster ausgehend von dem Trennringkörper genau in der entgegengesetzten Richtung wie die Trennstege der zweiten Reihe Ventilgehäusefenster.

Ein weiteres bevorzugtes Ausführungsbeispiel der Ventileinrichtung ist dadurch gekennzeichnet, dass der Trennringkörper ein Außengewinde aufweist. Das Außengewinde am Trennringkörper dient dazu, das Ventilgehäuse formschlüssig mit einer Ausnehmung oder einem Sackloch in einem Brennkraftmaschinenteil zu verbinden.

Ein weiteres bevorzugtes Ausführungsbeispiel der Ventileinrichtung ist dadurch gekennzeichnet, dass das Ventilgehäuse so in einer Ausnehmung eines Brennkraftmaschinenteils aufgenommen ist, dass der erste Ringkanal im Bereich eines ersten Ausgangskanals und der zweite Ringkanal im Bereich eines zweiten Ausgangskanals angeordnet ist. Dabei kommt der Trennringkörper dichtend so an der Ausnehmung zur Anlage, dass die beiden Ringkanäle fluidisch über die Ausnehmung nicht mit einander in Verbindung stehen.

Ein weiteres bevorzugtes Ausführungsbeispiel der Ventileinrichtüng ist dadurch gekennzeichnet, dass in dem Ventilgehäuse ein Steuerschieber so hin und her bewegbar ist, dass der Eingang für den Fluidstrom mit dem ersten Ausgang, insbesondere einem Wärmeübertragerausgang, mit dem zweiten Ausgang, insbesondere einem Kurzschlussausgang, oder mit beiden Ausgängen verbunden wird. Durch den Steuerschieber kann gezielt mindestens ein Ventilgehäusefenster zu einem der Ringkanäle hin freigegeben werden, um den jeweiligen Ringkanal mit dem Eingang für den Fluidstrom zu verbinden. Der Steuerschieber ist vorzugsweise durch die Vorspannkraft einer Rückstellfeder in eine Ausgangsstellung vorgespannt. Die Ansteuerung oder Betätigung des Steuerschiebers erfolgt vorzugsweise temperaturabhängig, zum Beispiel durch ein Dehnstoffelement Je nach Ausführung kann der Steuerschieber auch so ausgelegt werden, dass in einer Stellung des Steuerschiebers keiner der beiden Ausgänge mit dem Eingang für den Fluidstrom in Verbindung steht.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: eine perspektivische Darstellung einer Ventileinrichtung gemäß einem ersten Ausführungsbeispiel;
- Figur 2: eine Schnittdarstellung der Ventileinrichtung aus Figur 1 im eingebauten Zustand im Kurzschlussbetrieb;
- Figur 3: die Ventileinrichtung aus Figur 2 im Mischbetrieb;
- Figur 4: die Ventileinrichtung aus Figur 2 im Kühlerbetrieb;
- Figur 5: eine perspektivische Darstellung einer Ventileinrichtung gemäß einem zweiten Ausführungsbeispiel;
- Figur 6: eine Schnittdarstellung der Ventiteinrichtung aus Figur 5 im eingebauten Zustand im Kurzschlussbetrieb;
- Figur 7: die Ventileinrichtung aus Figur 6 im Mischbetrieb und
- Figur 8: die Ventileinrichtung aus Figur 6 im Kühlerbetrieb.

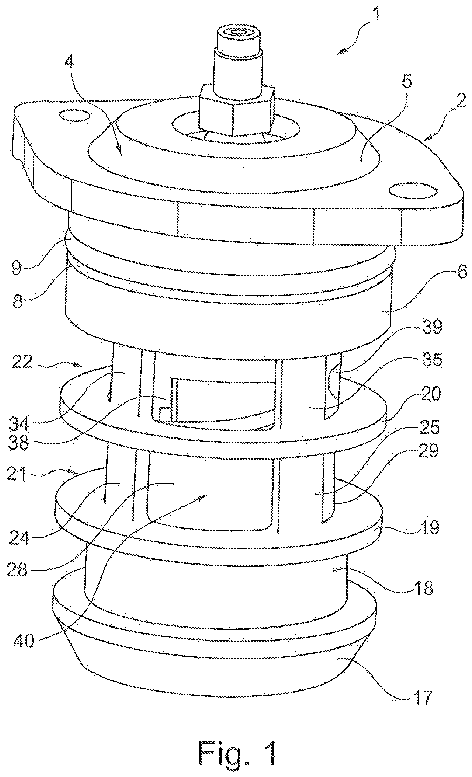

In Figur 1 ist eine Ventileinrichtung 1 mit einem Ventilgehäuse 2 perspektivisch dargestellt. Das Ventilgehäuse 2 umfasst einen Ventilgehäusekopf 4 mit einem Ventilgehäusedeckel 5, von dem ein Mantelkörper 6 ausgeht, der im Wesentlichen die Gestalt eines geraden Kreiszylinderabschnitts aufweist. In dem Mantelkörper 6 ist eine Ringnut 8 vorgesehen, die zur Aufnahme einer O-Ringdichtung 9 dient.

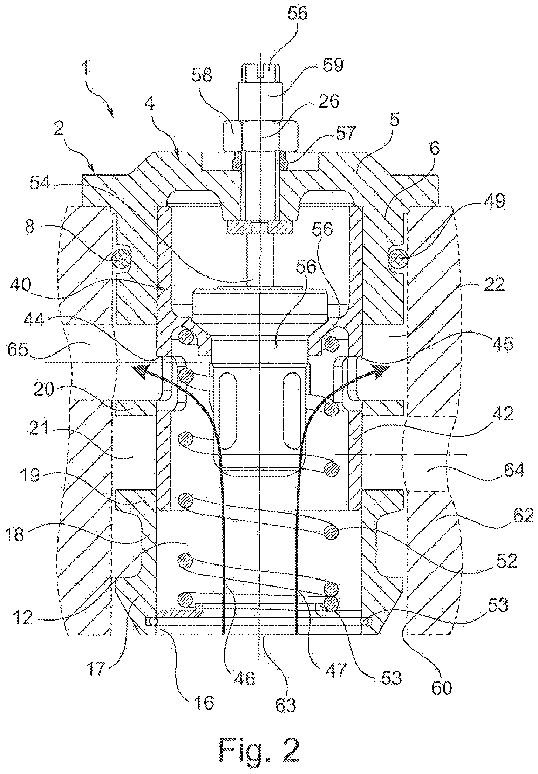

In den Figuren 2 bis 4 ist die Ventileinrichtung 1 aus Figur 1 im Längsschnitt im eingebauten Zustand dargestellt. Das Ventilgehäuse 2 umfasst einen Hohlraum 12, der im Wesentlichen die Gestalt eines geraden Kreiszylinders aufweist. An seinem dem Ventilgehäusekopf 4 abgewandten Ende weist das Ventilgehäuse 2 eine Eingangsöffnung 16 auf, die in einem Abschlusskörper 17 des Ventilgehäuses 2 vorgesehen ist. Über die Eingangsöffnung 16 ist der im Inneren des Ventilgehäuses 2 vorgesehene Hohlraum 12 geöffnet.

Der Abschlusskörper 17 des Ventilgehäuses 2 ist Ober einen Verbindungskörper 18 einstückig mit einem Ringkörper 19 verbunden. Der Ringkörper 19 hat den gleichen Außendurchmesser wie der Abschlusskörper 17, der sich, im Längsschnitt betrachtet, zu seinem freien Ende hin verjüngt. Der Verbindungskörper 18 hat die Gestalt eines geraden Kreiszylindermantels, dessen Außendurchmesser kleiner als der Außendurchmesser des Ringkörpers 19 ist. Der Abschlusskörper 17 und der Ringkörper 19 haben vorzugsweise den gleichen Innendurchmesser.

In axialer Richtung ist zwischen dem Ringkörper 19 und einem Trennringkörper 20 ein erster äußerer Ringkanal 21 ausgebildet. Ein zweiter äußerer Ringkanal 22 ist in axialer Richtung zwischen dem Trennringkörper 20 und dem Mantelkörper 6 ausgebildet. Die beiden Ringkanäle 21 und 22 werden als äußere Ringkanäle bezeichnet da sie nach außen hin offen sind. Im eingebauten Zustand werden die äußeren Ringkanäle nach außen hin teilweise geschlossen.

Der erste Ringkanal 21 ist durch Trennstege 24, 25 unterbrochen, die sich in Längsrichtung zwischen dem Ringkörper 19 und dem Trennringkörper 20 erstrecken. Als Längsrichtung wird eine Richtung parallel zu einer Längsachse 26 der Ventileinrichtung 1 beziehungsweise des Ventilgehäuses 2 verstanden. Der Ringkörper 19 und der Trennringkörper 20 sind koaxial zur Längsachse 26 angeordnet.

Das in den Figuren 1 bis 4 dargestellte Ausführungsbeispiel des Ventilgehäuses 2 umfasst insgesamt vier Trennstege 24, 25, die gleichmäßig über den Umfang des Ventilgehäuses 2 verteilt sind. Zwei Trennstege 24, 25 begrenzen jeweils ein Fenster 28, 29 In Umfangsrichtung. In axialer Richtung, das heißt parallel zur Längsachse 26, werden die Fenster 28, 29 von dem Ringkörper 19 und dem Trennringkörper 20 begrenzt.

In Verlängerung der Trennstege 24, 25 der Fenster 28, 29 erstrecken sich weitere Trennstege 34, 35 zwischen dem Trennringkörper 20 und dem Mantelkörper 6. Die Trennstege 34, 35 begrenzen, genauso wie die Trennstege 24, 25, in Umfangsrichtung 4 weitere Fenster 38, 39, die in axialer Richtung von dem Trennringkörper 20 und dem Mantelkörper 6 begrenzt werden.

In dem Ventilgehäuse 2 ist ein Steuerschieber 40 in axialer Richtung hin und her bewegbar aufgenommen. Der Steuerschieber 40 umfasst einen Schließkörper 42, der im Wesentlichen die Gestalt eines geraden Kreiszylindermantels aufweist. In dem Schließkörper 42 sind Öffnungen 44, 45 ausgespart, die ganz oder teilweise in Überdeckung mit den Fenstern 28, 29 und 38, 39 des Ventilgehäuses 2 gebracht werden können.

In Figur 2 ist die Ventileinrichtung 1 im Kurzschlussbetrieb dargestellt. Durch Pfeile 46, 47 ist angedeutet, dass ein Fluidstrom, der durch die Eingangsöffnung 16 in den Hohlraum 12 des Ventilgehäuses 2 eintritt, durch die sich überdeckenden Öffnungen 44, 45 und die Fenster 38, 39 im Bereich des zweiten Ringkanals 22 aus dem Hohlraum 12 austritt. Die Fenster 28, 29 sind durch den Schließkörper 42 des Steuerschiebers 40 vom Hohlraum 12 abgeschlossen.

Die Ventileinrichtung 1 wird über eine Betätigungseinrichtung 48 betätigt, die beispielsweise ein Dehnstoffelement umfasst Die Betätigungseinrichtung 48 ist zusammen mit einer Rückstellfeder 52 in dem Steuerschieber 40 beziehungsweise dem Ventilgehäuse 2 untergebracht. Die Rückstellfeder 52 ist zwischen einem Kragen 49, der innen an dem Schließkörper 42 ausgebildet ist, und einem Federteller 51 eingespannt, der mit Hilfe eines Sicherungsrings 53 in axialer Richtung an dem Abschiusskörper 17 des Ventilgehäuses 2 gehalten ist.

Die Betätigungseinrichtung 48 kann über eine Ventilstange 54 verstellt werden, die sich durch den Ventilgehäusekopf 4 aus dem Hohlraum 12 nach außen erstreckt. An dem freien Ende der Ventilstange 54 ist ein Schraubenkopf 56 ausgebildet. Zur Abdichtung ist zwischen der Ventilstange 54 und dem Ventilgehäusedeckel 5 ein Dichtelement 57 angeordnet. In axialer Richtung zwischen dem Dichtelement 57 und dem Schraubenkopf 56 sind des Weiteren eine Mutter 58 und eine Hülse 59 angeordnet. Die Elemente 26, 56, 57, 58 und 59 sind dabei für eine mechanische Verstellung, insbesondere Notverstellung, der Betätigungseinrichtung 48 ausgebildet.

In dem in den Figuren 2 bis 4 dargestellten eingebauten Zustand ist die Ventileinrichtung 1 zum größten Teil in einer Ausnehmung 60 eines Brennkraftmaschinenteils 62 aufgenommen. Der Ausnehmung 60 wird über einen Eingang 63 der Fluidstrom zugeführt. In Abhängigkeit von der Stellung des Ventilschließkörpers 42 in dem Ventilgehäuse 2 gelangt der Fluidstrom, wie durch die Pfeile 46, 47 und weitere Pfeile 71 bis 76 angedeutet ist, ganz oder teilweise zu einem ersten Ausgang 64 im Bereich des ersten Ringkanals 21 oder zu einem zweiten Ausgang 65 im Bereich des zweiten Ringkanals 22.

Der erste Ausgang 64 ist vorzugsweise mit einem Kühler verbunden und wird daher auch als Kühlerausgang bezeichnet. Der zweite Ausgang 65 steht vorzugsweise mit einem Kurzschlusskanal oder Bypasskanal in Verbindung, der den Kühler umgeht, und wird daher auch als Kurzschlussausgang bezeichnet.

In dem in Figur 2 dargestellten Kurzschlussbetrieb gelangt der an dem Eingang 63 eintretende Fluidstrom, wie durch die Pfeile 46, 47 angedeutet ist, durch die Öffnungen 44, 45 und den zweiten Ringkanal 22 zu dem zweiten Ausgang oder Kurzschlussausgang 65.

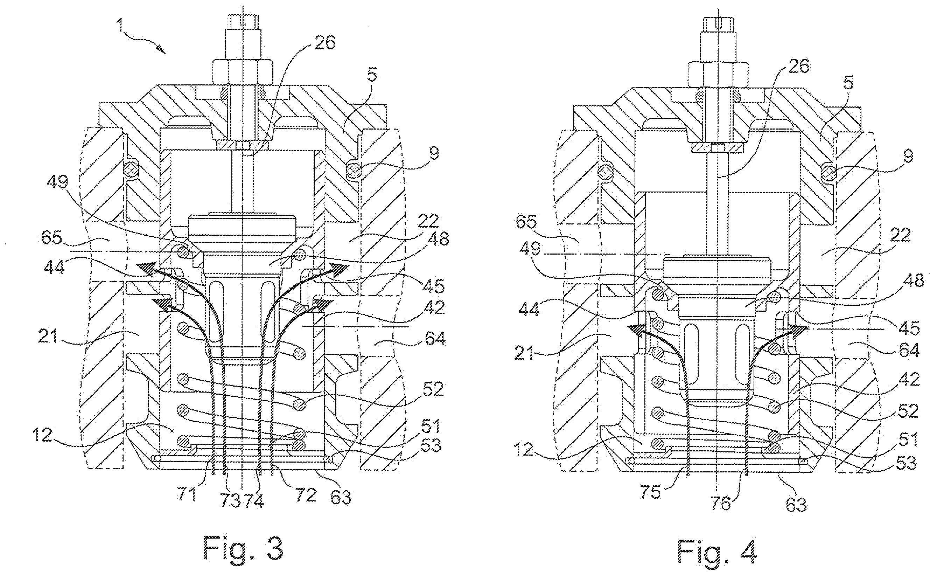

In dem in Figur 3 dargestellten Mischbetrieb gelangt ein Teil des an dem Eingang 63 eintretenden Fluidstroms, wie durch die Pfeile 71 und 72 angedeutet ist, über die Öffnungen 44, 45 und den ersten Ringkanal 21 zu dem ersten Ausgang oder Kühlerausgang 64. Ein anderer Teil des Fluidstroms gelangt gleichzeitig, wie durch die Pfeile 73 und 74 angedeutet ist, durch die Öffnungen 44, 45 und den zweiten Ringkanal 22 zu dem zweiten Ausgang oder Kurzschlussausgang 65.

Bei dem in Figur 4 dargestellten Kühlerbetrieb gelangt der an dem Eingang 63 eintretende Fluidstrom, wie durch die Pfeile 75 und 76 angedeutet ist, über die Öffnungen 44, 45 und den ersten Ringkanal 21 zu dem ersten Ausgang oder Kühlerausgang 64.

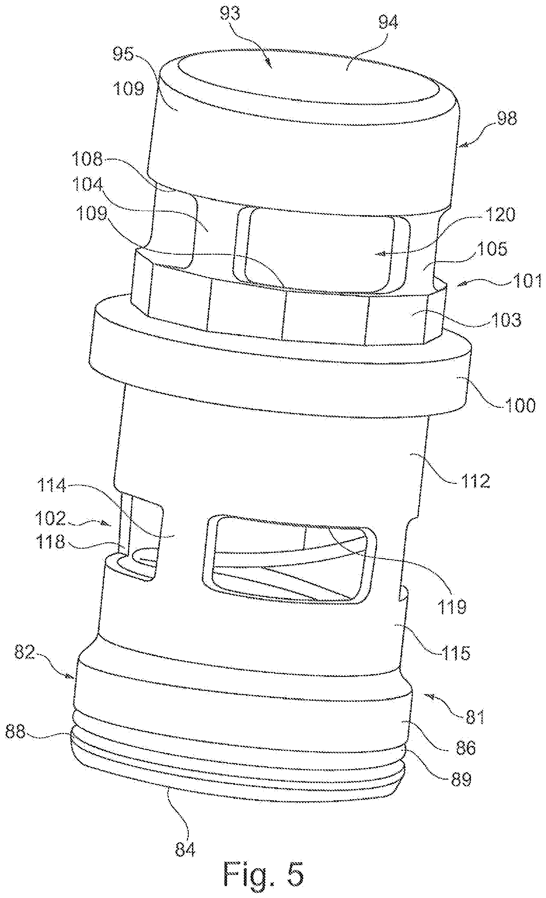

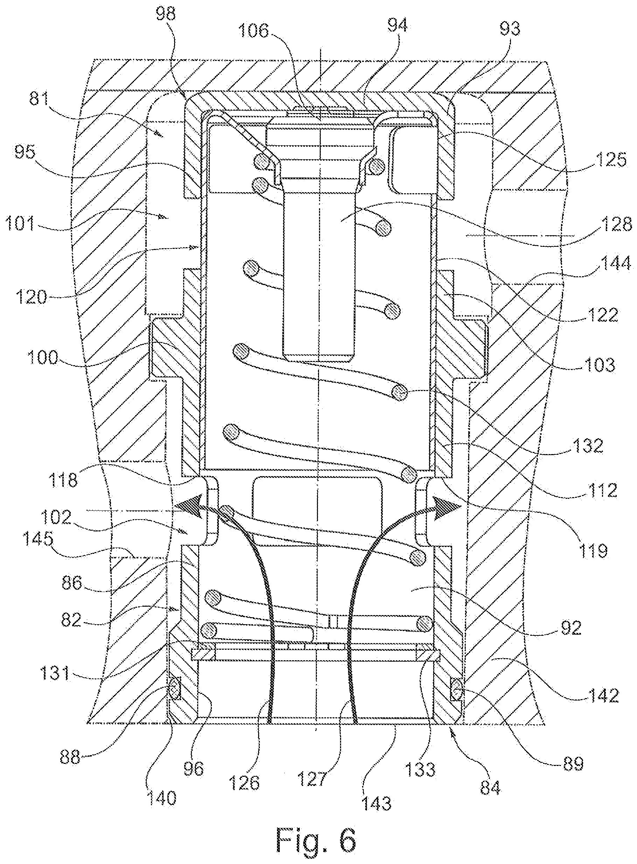

In Figur 5 ist eine ähnliche Ventileinrichtung 81 wie in Figur 1 perspektivisch dargestellt. Die Ventileinrichtung 81 umfasst ein Ventilgehäuse 82 mit einem Ventilgehäusekopf 84, von dem ein Mantelkörper 86 ausgeht, der im Wesentlichen die Gestalt eines geraden Kreiszylindermantels aufweist. Der Mantelkörper 86 umfasst, wie bei dem vorangegangenen Ausführungsbeispiel, eine Ringnut 88, in der ein O-Ring 89 aufgenommen ist. In dem Ventilgehäuse 82 ist ein Hohlraum 92 ausgespart.
Im Unterschied zu dem vorangegangenen Ausführungsbeispiel ist der Ventilgehäusekopf 84 nicht geschlossen aufgeführt, sondern mit einer Eingangsöffnung 96 für eine Fluidströmung versehen, wie man in den Figuren 6 bis 8 sieht. Dagegen ist ein Abschlusskörper 98 am anderen Ende des Ventilgehäuses 82 topfartig geschlossen ausgeführt.

Der Abschlusskörper 98 umfasst eine Art Topf 93 mit einem geschlossenen Topfboden 94, von dem sich ein Topfmantel 95 erstreckt, der im Wesentlichen die Gestalt eines geraden Kreiszylindermantels aufweist. Zwischen dem Ventilgehäusekopf 84 und dem Abschlusskörper 98 umfasst das Ventilgehäuse 82 einen Trennringkörper 100. der mit einem Außengewinde versehen ist.

Der Trennringkörper 100 trennt einen ersten Ringkanal 101 in axialer Richtung Von einem zweiten Ringkanal 102. Von dem Trennringkörper 100 erstreckt sich ein mit Abflachungen versehener Ansatz 103 zu dem Abschlusskörper 98 hin. Der Ansatz 103 ist Ober Trennstege 104, 105 einstückig mit dem Topfmantel 95 verbunden.

Bei dem dargestellten Ausführungsbeispiel sind insgesamt vier Trennstege 104, 105 gleichmäßig über den Umfang des Ventilgehäuses 82 verteilt und erstrecken sich parallel zu einer Längsachse 106 des Ventilgehäuses 82. Die Trennstege 104, 105 unterteilen den Bereich zwischen dem Topfmantel 95 und dem Ansatz 103 in Fenster 108, 109, die sich von dem Hohlraum 92 im Inneren des Ventilgehäuses 82 zu dem ersten Ringkanal 101 öffnen.

Von der anderen Seite des Trennringkörpers 100 erstreckt sich ein im Wesentlichen kreiszylindermantelförmiger Ansatz 112 zu dem Mantelkörper 86 hin. Der Ansatz 112 ist über weitere Trennstege 114, 115, die sich in Verlängerung der Trennstege 104, 105 erstrecken, einstückig mit dem Mantelkörper 86 verbunden. Durch die Trennstege 114, 115 werden in dem Bereich zwischen dem Trennringkörper 100 und dem Mantelkörper 86 weitere Fenster 118, 119 geschaffen, die sich von dem Hohlraum 92 zu dem zweiten Ringkanal 102 hin öffnen.

In dem Ventilgehäuse 82 ist ein Steuerschieber 120 mit einem Schließkörper 122 in Längsrichtung hin und her bewegbar aufgenommen. Der Schließkörper 122 hat im Wesentlichen die Gestalt eines Kreiszylindermantels mit mindestens einer Öffnung 125, die bei dem in Figur 6 dargestellten Kurzschlussbetrieb so in dem Topf 93 des Abschlusskörpers 98 aufgenommen ist, dass die Öffnung 125 durch den Topfmantel 95 verschlossen ist.

Die Fenster 108, 109 im Ventilgehäuse 82 sind, wie man in Figur 6 sieht, im Kurzschlussbetrieb durch den Schließkörper 122 verschlossen, so dass der Fluidstrom nicht durch diese Fenster aus dem Hohlraum 92 in den ersten Ringkanal 101 gelangt. Dagegen sind die Fenster 118, 119 im Bereich des zweiten Ringkanals 102 nicht von dem Schließkörper 122 verdeckt, so dass, wie durch Pfeife 126, 127 in Figur 6 angedeutet ist, ein durch die Eingangsöffnung 96 in den Hohlraum 92 eintretender Fluidstrom durch die Fenster 118, 119 in den zweiten Ringkanal 102 gelangt.

Die Ventileinrichtung 81 ist durch eine Betätigungseinrichtung 128 beispielsweise mit einem Dehnstoffelement betätigbar. Die Betätigungseinrichtung 128 ist in dem Steuerschieber 120 untergebracht. Eine Rückstellfeder 132 ist vorzugsweise zwischen der Betätigungseinrichtung 128 und einem insbesondere vorgesehenen Federteller 131 eingespannt, der bevorzugt mit Hilfe eines Sicherungsrings 133 in axialer Richtung im Inneren des Mantelkörpers 86 des Ventilgehäuses 82 abgestützt ist.

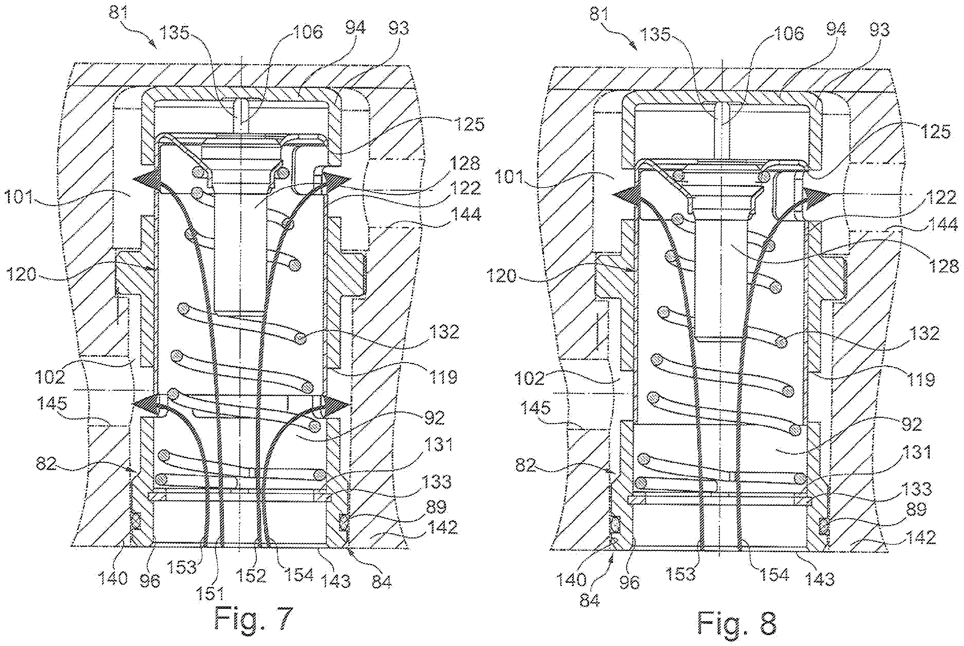

In den Figuren 7 und 8 sieht man, dass sich der Steuerschieber 120 mit dem Schließkörper 122 von dem Topfboden 94 weg bewegt, wenn sich ein Dehnstoffkörper 135 der Betätigungseinrichtung 128 unter Temperatureinwirkung ausdehnt. Die Ventileinrichtung 81 ist, wie bei dem vorangegangenen Ausführungsbeispiel, in einer Ausnehmung 140 eines Brennkraftmaschinenteils 142 aufgenommen.

Im Unterschied zu dem vorangegangenen Ausführungsbeispiel ist jedoch ein Eingang 143 für den Fluidstrom bei dem Ventilgehäusekopf 84 angeordnet, der die Eingangsöffnung 96 für den Fluidstrom aufweist. Die Ausnehmung 140 umfasst einen ersten Ausgang 144, der mit einem Kühler in Verbindung steht und daher auch als Kühlerausgang bezeichnet wird. Ein zweiter Ausgang 145 der Ausnehmung 140 steht mit einem Kurzschlusskanal in Verbindung und wird daher auch als Kurzschlussausgang bezeichnet.

In Figur 7 ist durch Pfeile 151 bis 154 der Mischbetrieb der Ventileinrichtung 81 angedeutet. Der Schließkörper 122 des Steuerschiebers 120 ist im Mischbetrieb so in dem Ventilgehäuse 82 angeordnet, dass jeweils etwa die Hälfte sowohl der Fenster 108, 109, die sich in den ersten Ringkanal 101 öffnen, als auch der Fenster 118, 119, die sich in den zweiten Ringkanal 102 öffnen, von dem Schließkörper 122 freigegeben wird.

Durch die Pfeile 151, 152 ist angedeutet, dass ein Teil des durch den Eingang 143 und die Eingangsöffnung 96 eintretenden Fluidstroms über den ersten Ringkanal 101 zu dem ersten Ausgang oder Kühlerausgang 144 gelangt. Durch die Pfeile 153, 154 ist angedeutet, dass der andere Teil des eintretenden Fluidstroms über den zweiten Ringkanal 102 zu dem zweiten Ausgang oder Kurzschlussausgang 145 gelangt.

In Figur 8 ist durch Pfeile 155, 156 der Kühlerbetrieb der Ventileinrichtung 81 angedeutet. Durch weitere Ausdehnung des Dehnstoffkörpers 135 ist der Steuerschieber 120 mit dem Schließkörper 122 soweit nach unten in dem Ventilgehäuse 82 zu der Eingangsöffnung 96 hin verschoben, dass die Fenster 118, 119 zum zweiten Ringkanal 102 hin durch den Schließkörper 122 verschlossen werden. Dabei kommt die Öffnung 125 in dem Schließkörper 122 gleichzeitig mit einem der Fenster 108, 109 in Überdeckung, die sich zu dem ersten Ringkanal 101 hin öffnet. Somit gelangt der durch den Eingang 143 und die Eingangsöffnung 96 eintretende Fluidstrom über den ersten Ringkanal 101 zu dem ersten Ausgang oder Kühlerausgang 144.

## Patentansprüche

1. Ventileinrichtung zum Regeln eines Fluidstroms mit einem Ventilgehäuse (2;82), das einen Eingang (16;96) für den Fluidstrom sowie einen ersten und einen zweiten Ausgang aufweist, **dadurch gekennzeichnet, dass** dem ersten Ausgang des Ventilgehäuses (2;82) ein erster äußerer Ringkanal (21;101) zugeordnet ist, der durch einen Trennringkörper (20;100) des Ventilgehäuses (2;82) von einem zweiten äußeren Ringkanal (22;102) getrennt ist, der dem zweiten Ausgang des Ventilgehäuses (2;82) zugeordnet ist, wobei der erste Ausgang mindestens ein erstes Ventilgehäusefenster (28,29;108,109) umfasst, das sich in den ersten Ringkanal (21;101) öffnet und wobei dem ersten Ringkanal (21;101) eine erste Reihe Ventilgehäusefenster (28,29;108,109) zugeordnet sind, die sich in den ersten Ringkanal (21;101) öffnen, wobei die Ventilgehäusefenster (28,29; 108,109) der ersten Reihe durch Trennstege (24,25;104,105) voneinander getrennt sind und wobei die Trennstege (24,25;104,105) der ersten Reihe Ventilgehäusefenster (28,29;108,109) einstückig mit einem Abschlusskörper (17;98) des Ventilgehäuses (2;82) verbunden sind, wobei der zweite Ausgang mindestens ein zweites Ventilgehäusefenster (38,39;118,119) umfasst, das sich in den zweiten Ringkanal (22;102) öffnet, wobei dem zweiten Ringkanal (22;102) eine zweite Reihe Ventilgehäusefenster (38,39;118,119) zugeordnet sind, die sich in den zweiten Ringkanal (22; 102) öffnen, wobei die Ventilgehäusefenster (38,39;118,119) der zweiten Reihe durch Trennstege (34,35;114,115) voneinander getrennt sind und wobei die Trennstege (34,35;114,115) der zweiten Reihe Ventilgehäusefenster (38,39;118,119) einstückig mit einem Kopf (4;84) des Ventilgehäuses (2;82) verbunden sind.

2. Ventileinrichtung nach Anspruch 1, **dadurch gekennzeichnet, dass** die Trennstege (24,25;34,35;104,105;114,115) senkrecht zu dem Trennringkörper (20;100) verlaufen.

3. Ventileinrichtung nach Anspruch 1 oder 2, **dadurch gekennzeichnet, dass** die Trennstege (24,25;34,35;104,105;114,115) einstückig mit dem Trennringkörper (20;100) verbunden sind.

4. Ventileinrichtung nach einem der vorhergehenden Ansprüche, **dadurch gekennzeichnet, dass** die Trennstege (24,25;34,35;104,105;114,115) gleichmäßig über den Umfang des Ventilgehäuses (2;82) verteilt sind.

5. Ventileinrichtung nach einem der vorhergehenden Ansprüche, **dadurch gekennzeichnet, dass** der Trennringkörper (100) ein Außengewinde aufweist.

6. Ventileinrichtung nach einem der vorhergehenden Ansprüche, **dadurch gekennzeichnet, dass** das Ventilgehäuse (2;82) so in einer Ausnehmung (60;140) eines Brennkraftmaschinenteils (62;142) aufgenommen ist, dass der erste Ringkanal (21;101) im Bereich eines ersten Ausgangskanals und der zweite Ringkanal (22;102) im Bereich eines zweiten Ausgangskanals angeordnet ist.

7. Ventileinrichtung nach einem der vorhergehenden Ansprüche, **dadurch gekennzeichnet, dass** in dem Ventilgehäuse (2;82) ein Steuerschieber (40;120) so hin und her bewegbar ist, dass der Eingang (63;143) für den Fluidstrom mit dem ersten Ausgang (64;144), insbesondere einem Wärmeübertragerausgang, mit dem zweiten Ausgang (65;145), insbesondere einem Kurzschlussausgang, oder mit beiden Ausgängen (64,65;144,145) verbunden wird.

## Claims

1. A valve arrangement for regulating a fluid flow with a valve housing (2; 82) having an inlet (16; 96) for the fluid flow and a first and a second outlet, **characterised in that** a first outer ring channel (21; 101) is assigned to the first outlet of the valve housing (2; 82), separated from a second outer ring channel (22; 102) which is assigned to the second outlet of the valve housing (2; 82) by a separating ring body (20; 100) of the valve housing (2; 82), wherein the first outlet comprises at least one first valve housing window (28, 29; 108, 109) which opens into the first ring channel (21; 101) and wherein a first row of valve housing windows (28, 29; 108, 109) which open into the first ring channel (21; 101) is assigned to the first ring channel (21; 101), wherein the valve housing windows (28, 29; 108, 109) of the first row are separated from each other by separating webs (24, 25; 104, 105) and wherein the separating webs (24, 25; 104, 105) of the first row of valve housing windows (28, 29; 108, 109) are integrally connected to a terminating body (17; 98) of the valve housing (2; 82), wherein the second outlet comprises at least one second valve housing window (38, 39; 118, 119) which opens into the second ring channel (22; 102), wherein a second row of valve housing windows (38, 39; 118, 119) which open into the second ring channel (22; 102) is assigned to the second ring channel (22; 102), wherein the valve housing windows (38, 39; 118, 119) of the second row are separated from each other by separating webs (34, 35; 114, 115) and wherein the separating webs (34, 35; 114, 115) of the second row of valve housing windows (38, 39; 118, 119) are integrally connected to a head (4; 84) of the valve housing (2; 82).

2. The valve arrangement according to claim 1, **characterised in that** the separating webs (24, 25; 34, 35; 104, 105; 114, 115) run perpendicular to the separating ring body (20, 100).

3. The valve arrangement according to claim 1 or 2, **characterised in that** the separating webs (24, 25; 34, 35; 104, 105; 114, 115) are integrally connected to the separating ring body (20, 100).

4. The valve arrangement according to one of the preceding claims, **characterised in that** the separating webs (24, 25; 34, 35; 104, 105; 114, 115) are uniformly spread across the circumference of the valve housing (2; 82).

5. The valve arrangement according to one of the preceding claims, **characterised in that** the separating ring body (100) has an external thread.

6. The valve arrangement according to one of the preceding claims, **characterised in that** the valve housing (2; 82) is received in a recess (60; 140) of an internal combustion engine part (62; 142) in such a way that the first ring channel (21; 101) is arranged in the area of a first outlet channel and the second ring channel (22; 102) is arranged in the area of a second outlet channel.

7. The valve arrangement according to one of the preceding claims, **characterised in that** inside the valve housing (2; 82), a control slide (40; 120) can be moved back and forth in such a way that the inlet (63; 143) for the fluid flow is connected to the first outlet (64; 144), in particular a heat exchanger outlet, to the second outlet (65; 145), in particular a short outlet, or to both outlets (64, 65; 144, 145).

## Revendications

1. Dispositif formant vanne servant au réglage d'un flux de fluide, ledit dispositif formant vanne comprenant un boîtier de vanne (2 ; 82) qui présente une entrée (16 ; 96) prévue pour le flux de fluide, ainsi qu'une première et une deuxième sortie, **caractérisé en ce qu'**un premier conduit annulaire extérieur (21 ; 101) est associé à la première sortie du boîtier de vanne (2 ; 82), premier conduit annulaire extérieur qui est séparé d'un deuxième conduit annulaire extérieur (22 ; 102) par un corps annulaire de séparation (20 ; 100) du boîtier de vanne (2 ; 82), deuxième conduit annulaire extérieur qui est associé à la deuxième sortie du boîtier de vanne (2 ; 82), où la première sortie comprend au moins une première fenêtre de boîtier de vanne (28, 29 ; 108, 109) qui s'ouvre dans le premier conduit annulaire (21 ; 101) et où une première rangée de fenêtres de boîtier de vanne (28, 29 ; 108, 109) est associée au premier conduit annulaire (21 ; 101), lesquelles fenêtres de boîtier de vanne s'ouvrent dans le premier conduit annulaire (21 ; 101), où les fenêtres de boîtier de vanne (28, 29 ; 108, 109) de la première rangée sont séparées les unes des autres par des barrettes de séparation (24, 25 ; 104, 105), et où les barrettes de séparation (24, 25 ; 104, 105) de la première rangée de fenêtres de boîtier de vanne (28, 29 ; 108, 109) sont assemblées en formant une seule et même pièce avec un corps de fermeture (17, 98) du boîtier de vanne (2 ; 82), où la deuxième ouverture comprend au moins une deuxième fenêtre de boîtier de vanne (38, 39 ; 118, 119) qui s'ouvre dans le deuxième conduit annulaire (22 ; 102), où une deuxième rangée de fenêtres de boîtier de vanne (38, 39 ; 118, 119) est associée au deuxième conduit annulaire (22 ; 102), lesquelles fenêtres de boîtier de vanne s'ouvrent dans le deuxième conduit annulaire (22 ; 102), où les fenêtres de boîtier de vanne (38, 39 ; 118, 119) de la deuxième rangée sont séparées les unes des autres par des barrettes de séparation (34, 35 ; 114, 115), et où les barrettes de séparation (34, 35 ; 114, 115) de la deuxième rangée de fenêtres de boîtier de vanne (38, 39 ; 118, 119) sont assemblées en formant une seule et même pièce avec une tête (4, 84) du boîtier de vanne (2 ; 82).

2. Dispositif formant vanne selon la revendication 1, **caractérisé en ce que** les barrettes de séparation (24, 25 ; 34, 35 ; 104, 105 ; 114, 115) s'étendent perpendiculairement au corps annulaire de séparation (20 ; 100).

3. Dispositif formant vanne selon la revendication 1 ou 2, **caractérisé en ce que** les barrettes de séparation (24, 25 ; 34, 35 ; 104, 105 ; 114, 115) sont assemblées en formant une seule et même pièce avec le corps annulaire de séparation (20 ; 100).

4. Dispositif formant vanne selon l'une quelconque des revendications précédentes, **caractérisé en ce que** les barrettes de séparation (24, 25 ; 34, 35 ; 104, 105 ; 114, 115) sont réparties de façon uniforme sur le pourtour du boîtier de vanne (2 ; 82).

5. Dispositif formant vanne selon l'une quelconque des revendications précédentes, **caractérisé en ce que** le corps annulaire de séparation (100) présente un filetage extérieur.

6. Dispositif formant vanne selon l'une quelconque des revendications précédentes, **caractérisé en ce que** le boîtier de vanne (2 ; 82) est logé dans une cavité (60 ; 140) d'une partie (62 ; 142) d'un moteur à combustion interne, de manière telle que le premier conduit annulaire (21 ; 101) soit disposé dans la zone d'un premier conduit de sortie et que le deuxième conduit annulaire (22 ; 102) soit disposé dans la zone d'un deuxième conduit de sortie.

7. Dispositif formant vanne selon l'une quelconque des revendications précédentes, **caractérisé en ce qu'**un tiroir de commande (40 ; 120) peut être déplacé par un mouvement de va-et-vient dans le boîtier de vanne (2 ; 82), de manière telle que l'entrée (63 ; 143) prévue pour le flux de fluide soit reliée à la première sortie (64 ; 144), en particulier une sortie d'échangeur de chaleur, qu'elle soit reliée à la deuxième sortie (65 ; 145), en particulier une sortie en court-circuit, ou bien qu'elle soit reliée aux deux sorties (64, 65 ; 144 ; 145).
